# EUROPEAN PATENT SPECIFICATION

(11) **EP 1 966 553 B1**
(45) Date of publication and mention of the grant of the patent: **12.10.2011**
(21) Application number: 06830636.4
(22) Date of filing: 15.12.2006
(51) Int. Cl.: F25D 29/00, H02M 7/06

(54) **A HOUSEHOLD APPLIANCE**
HAUSHALTSGERÄT
APPAREIL MÉNAGER

(30) Priority: 30.12.2005 TR 200505411
(43) Date of publication of application: 10.09.2008
(73) Proprietor: Arçelik Anonim Sirketi, 34950 Istanbul (TR)
(72) Inventor: EFECIK, Bulent, 34950 Istanbul (TR)
(74) Representative: Okat, Tolga
(86) International application number: PCT/EP2006/069740
(87) International publication number: WO 2007/077104

(56) References cited:
- US-A- 5 528 485
- US-A- 6 014 325
- US-A1- 2004 090 807

## Description

The present invention relates to a household appliance that can operate with a wide range of power supply voltages.

In household appliances, power sources are utilized that deliver direct current (DC) to various electronic units by converting the alternative current (AC) received from the power supply. In embodiments requiring high current, switched mode power supplies (SMPS) are preferred due to their high efficiency. However, in implementations requiring low current and more than one rectified voltage, capacitive supply is used because of their cost advantage over SMPS.

In capacitive sources supplying variable power, the electric current received from the power supply is limited by a capacitor and the voltage by diodes and stored on electrolytic capacitors. The excess current that can't be stored on a capacitor is discharged as heat over Zener diodes. The amount of current transformed to heat depends on the current received from the power supply, the voltage of the Zener diode and the current required by the electronic units. As a result of this, in a capacitive power source designed for use with a low voltage value, the Zener diodes are permanently damaged due to overheating when subjected to high voltage due to irregularities in the power supply. Therefore a narrow voltage range has to be selected for the capacitive power sources so that the Zener diodes are not damaged. And respectively in some household appliances that are required to operate over a wide range of voltage, switched mode power supplies (SMPS) have to be used instead of the cheaper capacitive supply.

State of the art United States patent no. US6014325, representing the preamble of claim 1 discloses: a refrigerator that comprises an AC to DC conversion circuit is explained. When a group of DC-powered components powered by the same DC power output, such as a group of relays, do not require DC power, the controller selectively disables or reduces a portion of the AC-to-DC power conversion circuit to reduce power consumption and heat dissipation therein.

The aim of the present invention is the realization of a household appliance wherein the converter is prevented from being damaged due to variable voltage in the power supply.

The household appliance realized in order to attain the aim of the present invention is explicated in the attached claims. In the household appliance of the present invention, a processor compares the current drawn from the power supply to the current drawn by the electronic units and directs at least some of the surplus current not required by the electronic units to a protection circuits, preventing the damage of the circuit elements in the converter, particularly the Zener diodes. The protection circuit transforms the surplus current into heat.

The household appliance realized in order to attain the aim of the present invention is illustrated in the attached figures, where:

Figure 1 - is the schematic view of a household appliance.

Figure 2 - is the circuit diagram of a converter, a processor, switching circuit and a protection circuit.

Figure 3 - is the circuit diagram of a converter, a processor, a switching circuit and a protection circuits in another embodiment of the present invention.

Elements shown in figures are numbered as follows:
1. Household appliance
2. Electronic unit
3. Converter
4. Switching circuit
5. Protection circuits
6. Processor

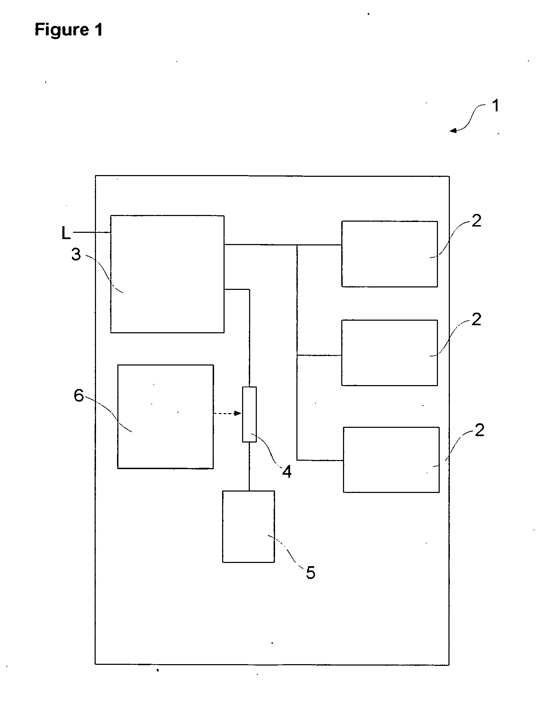

The household appliance (1) of the present invention comprises:
- at least one electronic unit (2) that controls the loads that operate with electricity,
- a capacitive converter (3) that rectifies the alternative current received from the power supply (L) and transmits to the electronic units (2),
- a switching circuit (4) that switches the current rectified by this converter (3),
- a protection circuit (5) connected in series to the switching circuit (4) that can transform the current into heat (Figure 1).

The household appliance (1) furthermore comprises a processor (6) that:
- controls the functions of the electronic units (2) by activating, deactivating according to a predetermined algorithm,
- calculates the current drawn by the operating electronic units (2) at a certain time,
- calculates the current drawn from the power supply (L),
- if the current drawn from the power supply (L) is greater than the current drawn by the operating electronic units (2), deactivating the switching circuits (4), providing to direct some of the current to the protection circuit (5) to be transformed to heat therein, without damaging the circuit elements of the converter (3) (figure 1).

The electronic units (2) are units such as relays, triacs that control the electrical loads of the compressor, valve, sensor, shutter, fan, heater etc. that varies depending on the type of the household appliance (1). In this embodiment of the present invention, the processor (6) can measure the voltage of the power supply (L). Furthermore, since it actives-deactivates the electronic units (2) according to an algorithm determined by the producer, it can detect which electronic units (2) are running at a certain moment and calculates the current drawn by the activated electronic units (2). The processor (6) calculates the magnitude of the current drawn by the converter (3) by taking advantage of the power supply (L) voltage data, providing to direct some of the current, if there is, in excess of the electronic units (2) requirements to the protection circuit (5) through the switching circuit (4). Hence, the excess current is transformed to heat in the protection circuit (5) instead of the converter (3).

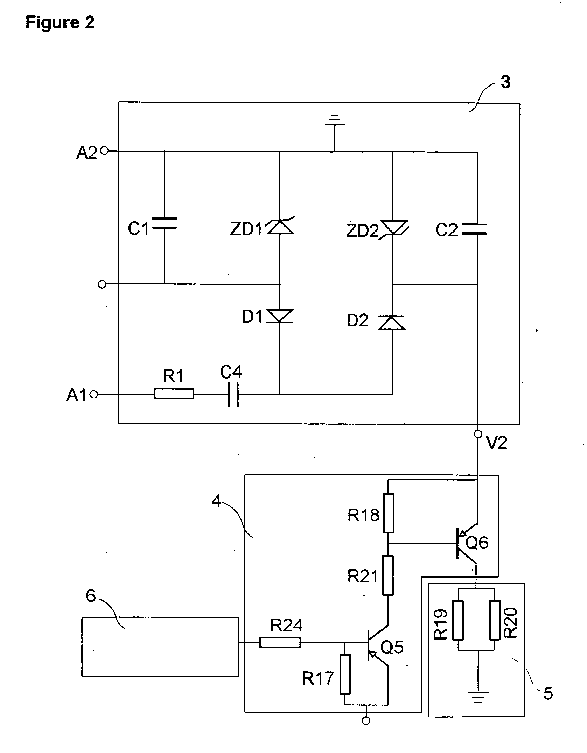

The converter (3) used in the household appliance (1) of the present invention, has state of the art configuration and comprises a resistor (R1) that limits the momentary current and connected in series thereto a capacitor (C4) that limits the current (Figure 2). The converter (3) furthermore comprises diodes (D1, D2, ZD1, ZD2) to stabilize the current and the electrolytic capacitors (C1, C2) that store the current. The electronic unit (2) is connected to terminal V2. Each phase of the power supply (L) is connected to terminals Al and A2. While some of the current flowing through the diodes (D1, D2, ZD1, ZD2) is stored in the capacitors (C1, C2), the unused part is discharged as heat over the Zener diode (ZD2). Particularly, the power supplies (L) that have voltage irregularities cause the Zener diodes (ZD2) to be overheated and damaged. While excess current is directed to the protection circuit (5), and since the electronic units (2) operating at the moment receive the current they require, the operation of the household appliance (1) is not interrupted.

In this embodiment, the switching circuits (4) connected to the V2 terminal of the converter (3) comprises one or more resistors (R18, R21, R17, R24) and one or more transistors (Q5, Q6) to limit the current. The transistor (Q5, Q6) is connected to the processor (6). When a signal is applied to the transistor (Q5, Q6), the switching circuit (4) is closed and some of the converter's (3) current is transferred to the protection circuit (5). In this embodiment of the present invention, the protection circuit (5) comprises one or more - connected in parallel - resistors (R19, R20). The resistors (R19, R20) transform the current flowing through them into heat (Figure 2). Consequently the overheating of the Zener diode (ZD2) is prevented.

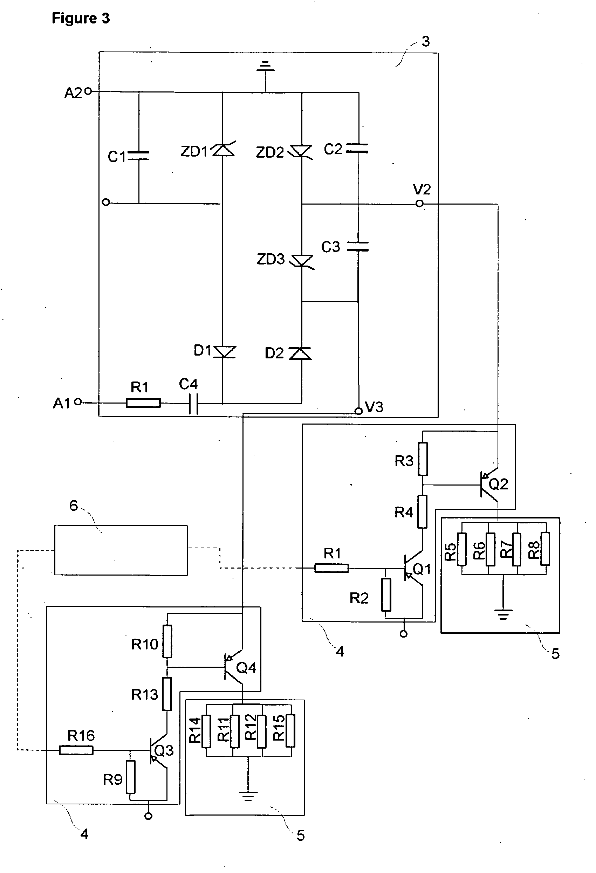

In an embodiment of the present invention, the converter (3) used comprises a current limiting resistor (R1) and connected in series thereto, a capacitor (C4) that limits the current, current stabilizing diodes (D1, D2, ZD1, ZD2, ZD3) and electrolytic capacitors (C1, C2, C3) that store the current (Figure 3). This converter (3) an be used in feeding more than one electronic unit (2). A different electronic unit (2) is connected to each terminal (V2 and V3). Furthermore a separate switching circuit (4) is connected to each terminal (V2 and V3). The switching circuits (4) comprise current limiting resistors (R1, R3, R4 and R10, R13, R16) and one or more transistors (Q1, Q2 and Q3, Q4). In this embodiment, the protection circuit (5) provides both of the Zener diodes (ZD2 and ZD3) to be protected from the current when connected between the V2 terminal and the ground. However, when the protection circuit (5) is connected between the V2 terminal and the V3 terminal, it only provides the ZD3 diode to be protected from excess current. The manufacturer an determine which Zener diode will be protected when by connecting the switching and the protection circuits (4 and 5) in suitable configurations to the converter (3). It is possible to direct some or all of the current flowing over the Zener diodes to the protection circuit (5).

In the embodiment of the present invention comprising more than one switching circuit (4) and more than one protection circuit (5), the processor (6) controls each switching circuit (4) separately. The processor (6) can activate one or more protection circuits (5) depending on the magnitude of the current drawn from the power supply (L).

In another embodiment of the present invention, when the current drawn from the power supply (L) is greater than the current required by the electronic units (2), the processor (6) turns off the switching circuit (4) in only the periods of the alternative current wherein it passes through Zener diodes (ZD 1, ZD2).

In another embodiment of the present invention, the protection circuit (5) is positioned at a place farther away than the converter (3) and the processor (6), to prevent these circuits (3 and 5) from being effected by the released heat.

By means of the present invention, when the power supply (L) current rises too much, the circuit elements of the converter (3), particularly the Zener diodes (ZD2, ZD3) are prevented from permanent damages due to overheating, without turning off the electric current delivered to the electronic units (2). By means of the embodiment of the present invention, since the protection circuit (5) can be positioned at a place farther away than the converter (3), a considerable amount of temperature reduction is realized in the converter (3). Furthermore, a power feed more tolerant to irregularities of the power supply, that can function in a wider range of voltage, is accomplishes.

## Claims

1. A household appliance (1) comprising at least one electronic unit (2) controlling the electrical loads thereof, a capacitive converter (3) that rectifies the alternative current received from the power supply (L) and transmits to the electronic units (2), a swishing circuit (4) that swishes the current rectified by the converter (3), a protection circuit (5) connected in series to the swishing circuit (4) that can transform the current into heat **and characterized by** a processor (6) that:
controls the functions of the electronic units (2) by activating, deactivating according to a predetermined algorithm by the producer, calculates the current drawn by the operating electronic units (2) at a certain time, calculates the current drawn from the power supply (L), deactivates the switching circuit (4),
without damaging the circuit elements of the converter (3), providing to direct some of the current to the protection circuit (5) to be transformed to heat there if the current drawn from the power supply (L) is greater than the current drawn by the electronic units (2).

2. A household appliance (1) as in Claim 1, **characterized by** a converter (3) comprising a resistor (R1) that limits the momentary current and connected in series thereto/a capacitor (C4) that limits the current, diodes (D1, D2, ZD1, ZD2) for stabilizing the current and electrolytic capacitors (C1, C2) that store the current and a swishing circuit (4) comprising one or more resistors (R18, R21, R17, R24) for limiting the current, one or more transistors (Q5, Q6) connected to the processor (6), that transfers some of the converter (3) current to the protection circuit (5) when a signal is applied to the transistor (Q5, Q6) by the processor (6).

3. A household appliance (1) as in the Claim 2, **characterized in that** said protection circuit (5) comprises one or more resistors (R19, R20) that are connected in series to each other.

4. A household appliance (1) as in Claim 2 or 3, **characterized in that** said processor (6) turns-off the swishing circuit (4) at only the periods of alternative current wherein it passes through Zener diodes (ZD1, ZD2).

5. A household appliance (1) as in any one of the above claims, c**haracterized** in that said processor (6) comprises more than one switching circuit (4) and more than one protection circuit (5), that can activate one or more protection circuits (5) depending on the magnitude of the current drawn from the power supply (L) by controlling each switching circuit (4) separately.

## Patentansprüche

1. Haushaltvorrichtung (1), umfassend wenigstens eine elektronische Einheit (2), die die ihre elektrische Last steuert, einen kapazitiven Wandler (3), der den Wechselstrom, den er von der Stromversorgung (L) erhält, gleichrichtet und an die elektronischen Einheiten (2) leitet, einen Schaltkreis (4), der den Strom, der vom Wandler (3) gleichgerichtet wurde, umschaltet, einen Schutzkreis (5), der in Serie mit dem Schaltkreis (4) verbunden ist und den Strom in Wärme umwandeln kann, und **gekennzeichnet durch** eine Verarbeitungseinheit (6), die:
die Funktionen der elektronischen Einheiten (2) steuert, indem sie sie gemäß einem vom Hersteller vorbestimmten Algorithmus aktiviert und deaktiviert, den **durch** die betreibenden elektronischen Einheiten (2) zu einem bestimmten Zeitpunkt aufgenommenen Strom berechnet, den aus der Stromversorgung (L) aufgenommenen Strom berechnet, den Schaltkreis (4) deaktiviert, ohne die Schaltelemente des Wandlers (3) zu beschädigen, und dafür sorgt, dass ein Teil des Stroms an den Schutzkreis (5) geleitet wird, damit er dort in Wärme umgewandelt wird, wenn der Strom, der von der Stromversorgung (L) aufgenommen wird, größer ist als der Strom, der **durch** die elektronischen Einheiten (2) aufgenommen wird.

2. Haushaltsvorrichtung (1) nach Anspruch 1, **gekennzeichnet durch** einen Wandler (3), umfassend einen Widerstand (R1), der den momentanen Strom begrenzt und in Serie mit einem Kondensator (C4) verbunden ist, welcher den Strom begrenzt, Dioden (D1, D2, ZD1, ZD1), die den Strom stabilisieren, und Elektrolytkondensatoren (C1, C2), die den Strom speichern, und **durch** einen Schaltkreis (4), umfassend einen oder mehrere Widerstände (R18, R21, R17, R24) zum Begrenzen des Stroms und einen oder mehrere Transistoren (Q5, Q6), die mit der Verarbeitungseinheit (6) verbunden sind und einen Teil des Stroms des Wandlers (3) an den Schutzkreis (5) leiten, wenn ein Signal von der Verarbeitungseinheit (6) an den Transistor (Q5, Q6) angelegt wird.

3. Haushaltsvorrichtung (1) nach Anspruch 2, **dadurch gekennzeichnet, dass** der Schutzkreis (5) einen oder mehrere Widerstände (R19, R20) umfasst, die in Serie miteinander verbunden sind.

4. Haushaltsvorrichtung (1) nach Anspruch 2 oder 3, **dadurch gekennzeichnet, dass** die Verarbeitungseinheit (6) den Schaltkreis (4) nur in Perioden von Wechselstrom ausschaltet, wobei dieser durch Zenerdioden (ZD1, ZD2) fließt.

5. Haushaltsvorrichtung (1) nach einem der vorangehenden Ansprüche, **dadurch gekennzeichnet, dass** die Verarbeitungseinheit (6) mehr als einen Schaltkreis (4) und mehr als einen Schutzkreis (5) umfasst und einen oder mehrere Schutzkreise (5) aktivieren kann, abhängig von der Größe des Stroms, der von der Stromversorgung (L) aufgenommen wird, indem jeder Schaltkreis (4) separat gesteuert wird.

## Revendications

1. Un électroménager (1) comprenant au moins une unité électronique (2) qui contrôle la charge électrique de celui-ci, un convertisseur capacitif (3) qui redresse le courant alternatif reçu de l'alimentation électrique (L) et qui le transmet aux unités électriques (2), un circuit de commutation (4) qui commute le courant redressé par le convertisseur (3), un circuit de protection (5) connecté en série au circuit de commutation (4) qui peut transformer le courant en chaleur, et **caractérisé par** un processeur (6) qui
contrôle les fonctions des unités électroniques (2) en les activant/désactivant en fonction d'un algorithme prédéterminé par le producteur, calcule le courant tiré à un certain moment par les unités électroniques (2) qui opèrent, calcule le courant tiré de l'alimentation électronique (L), désactive le circuit de commutation (4), sans endommager les éléments du convertisseur (3), permettant à une partie du courant d'être dirigée vers le circuit de protection (5) pour être transformée en chaleur si le courant tiré de l'alimentation électronique (L) est supérieure au courant tiré par les unités électronique (2).

2. Un électroménager (1) selon la Revendication 1, **caractérisé par** un convertisseur (3) comprenant une résistance (R1) qui limite le courant momentané et connecté en série à celui-ci, un condensateur (C4) qui limite le courant, des diodes (D1, D2, ZD1, ZD2) pour stabiliser le courant et des condensateurs électrolytiques (C1, C2) qui stockent le courant **et** un circuit de commutation (4) comprenant une ou plusieurs résistances (R18, R21, R17, R24) pour limiter le courant, un ou plusieurs transistors (Q5, Q6) connectés au processeur (6), qui transfèrent une partie de courant du convertisseur (3) au circuit de protection (5) quand un signal est appliqué au transistor (Q5, Q6) par le processeur (6).

3. Un électroménager (1) selon la Revendication 2, **caractérisé en ce que** ledit circuit de protection (5) comprend une ou plusieurs résistances (R19, R20) qui sont connectées en série l'une à l'autre.

4. Un électroménager (1) selon la Revendication 2 ou 3, **caractérisé en ce que** ledit processeur (6) désactive le circuit de commutation (4) seulement aux périodes du courant alternatif où il passe à traverse des diodes Zener (ZD1, ZD2).

5. Un électroménager (1) selon l'une quelconque des revendications précédentes, **caractérisé en ce que** ledit processeur (6) comprend plus d'un circuit de commutation (4) et plus d'un circuit de protection (5), qui peut activer un ou plusieurs circuits de protection (5) selon la grandeur du courant tiré de l'alimentation électronique (L) en contrôlant chaque circuit de commutation (4) séparément.
